# EUROPEAN PATENT APPLICATION

(11) **EP 4 737 093 A1**
(43) Date of publication of application: **06.05.2026**
(21) Application number: 24218559.3
(22) Date of filing: 10.12.2024
(51) Int. Cl.: B29C 45/14, B22D 17/24, B29C 45/36, E03C 1/04

(54) **FAUCET SHELL, MANUFACTURING METHOD AND MOLDS THEREOF**

(30) Priority: 01.11.2024 CN 202422665866 U
(71) Applicant: Guangdong Meijie Faucet Company Limited, Dongguan City, Guangdong 523766 (CN)
(72) Inventor: LUO, Xiaohua, Dongguan City, Guangdon, 523766 (CN)
(74) Representative: Herrero & Asociados, S.L.

(57) **Abstract**

A faucet shell, a manufacturing method and molds thereof are provided. The faucet shell includes a metal outer casing and a plastic inner tubular body. The plastic inner tubular body is disposed in the metal outer casing, and is in contact tightly with an inner wall of the metal outer casing. The metal outer casing includes a first metal outer tube and a second metal outer tube, a side of the first metal outer tube is integrally connected to the second metal outer tube, and the first metal outer tube is in communication with the second metal outer tube. The plastic inner tubular body includes a first plastic inner tube and a second plastic inner tube, a side of the first plastic inner tube is integrally connected to the second plastic inner tube, and the first plastic inner tube is in communication with the second plastic inner tube.

## Description

### CROSS-REFERENCE TO RELATED APPLICATION

This application claims priority to Chinese Patent Application No. 202422665866.6, filed on November 1, 2024, which is herein incorporated by reference in its entirety.

### TECHNICAL FIELD

The invention relates to the technical field of faucets, and more particularly to a faucet shell, a manufacturing method and molds thereof.

### BACKGROUND

A faucet shell is an outlet tube of a faucet. When the faucet shell is used as a tube of water for people to drink directly, it needs to be made of metal or plastic that does not add pollutants to the water for the sake of water safety and hygiene. However, there is a problem of high cost when the faucet shell is completely made of metal that meet the standards; while there is a problem of low aesthetic appearance, poor texture and low strength when the faucet shell is completely made of plastic.

In view of this, the inventor files a patent application with a Chinese patent publication No. CN105345988B on October 19, 2018, which discloses a water outlet tube, a faucet and a manufacturing method of the water outlet tube. Specifically, the manufacturing method of the water outlet tube includes the following steps. An outer tube shell made of metal is prepared. An injection mold is prepared, and the injection mold includes a mold core assembly and a mold plate assembly having a mold closing state and a mold opening state. When the mold plate assembly is in the mold opening state, the outer tube shell is placed into the mold plate assembly, and the mold plate assembly is closed. During closing the mold plate assembly, the mold core assembly is placed into a tube of the outer tube shell until the mold plate assembly is in the mold closing state. At this time, the mold core assembly and the outer tube shell together define a tubular cavity. Plastic in molten state is injected into the cavity. The plastic in molten state in the cavity is cooled and solidified.

The water outlet tube disclosed by the Chinese patent publication No. CN105345988B only has an integral bent or straight tube, it is necessary to assemble the water outlet tube onto a faucet shell during installation. The Chinses patent publication No. CN105345988B has the following disadvantages: (1) due to the fact that the water flow needs to pass through the faucet shell before flowing out of the water outlet tube, the faucet shell may still release trace amounts of harmful elements such as lead into the water flow during the process of flowing through the faucet shell; (2) the faucet shell and the water outlet tube are not integrated and need to be manufactured separately, which increases manufacturing costs and reduces the overall stability of the faucet; (3) due to the fact that both ends of the outer tube shell of the water outlet tube have openings, while both ends of the inner tube sleeve are not fixed, the inner tube sleeve is easily slid and loosened outward from the openings at the both ends of the outer tube shell during use; when those skilled in the art design an inner wall of the outer tube shell of the water outlet tube to have a concave convex surface to solve this problem, since the core of the die-casting mold cannot be pulled out from the outer tube shell with the concave convex surface, it will be difficult to use the core of the die-casting mold to match the inner hole of the formed outer tube shell when manufacturing the outer tube shell; (4) the manufacturing method disclosed by the Chinese patent publication No. CN105345988B can only mold the inner tube sleeve of the water outlet tube, and cannot mold the inner tube sleeve of the faucet shell.

### SUMMARY

A technical problem to be solved of the invention is to provide a faucet shell according to the above disadvantages of the related art. The faucet shell has two integrally connected metal outer tubes and two integrally connected plastic inner tubes, so that the two metal outer tubes and the two plastic inner tubes can form a whole, and the faucet shell has strong overall stability and high overall texture and aesthetics. When water flows through the two plastic inner tubes of the faucet shell, the water flows inside the two plastic inner tubes and does not contact with the metal outer casing. When the metal outer casing is made of a zinc alloy or an aluminum alloy, the metal outer casing will not be oxidized by water and will not release trace elements into the water, which is green, environmentally friendly and has a long service life. The two plastic inner tubes of the faucet shell can support and cooperate with each other to prevent any plastic inner tube from sliding and loosening from the two metal outer tubes. The manufacturing method of the faucet shell can simultaneously form the two plastic inner tubes in the two metal outer tubes. An injection mold of the plastic inner tubular body of the faucet shell can achieve the simultaneous molding of the two plastic inner tubes in the two metal outer tubes. A die-casting mold of the metal outer casing of the faucet shell can achieve the simultaneous molding the two metal outer tubes.

In order to solve the above technical problem, the invention provide a faucet shell, including a metal outer casing and a plastic inner tubular body. The plastic inner tubular body is disposed in the metal outer casing, and is in contact tightly with an inner wall of the metal outer casing. The metal outer casing includes a first metal outer tube and a second metal outer tube, a side of the first metal outer tube is integrally connected to the second metal outer tube, and the first metal outer tube is in communication with the second metal outer tube. The plastic inner tubular body includes a first plastic inner tube and a second plastic inner tube, a side of the first plastic inner tube is integrally connected to the second plastic inner tube, and the first plastic inner tube is in communication with the second plastic inner tube. The first plastic inner tube is disposed in the first metal outer tube, and is in contact tightly with an inner wall of the first metal outer tube. The second plastic inner tube is disposed in the second metal outer tube, and is in contact tightly with an inner wall of the second metal outer tube.

In an embodiment, the first metal outer tube is a straight tube, the second metal outer tube is an arc-shaped bent tube, the first plastic inner tube is a straight tube, and the second metal outer tube is an arc-shaped bent tube.

In an embodiment, an annular convex ring is disposed on the inner wall of the first metal outer tube, and an end of the first plastic inner tube is connected to a side of the annular convex ring.

In an embodiment, a material of the metal outer casing includes a zinc alloy or an aluminium alloy.

In an embodiment, a material of the plastic inner tubular body includes any one of polyphthalamide, polyformaldehyde, and polypheylene ether.

In order to solve the above technical problems, the invention provide a manufacturing method of the faucet shell, including:
step a, preparing the metal outer casing of the faucet shell;
step b, preparing an injection mold; where the injection mold includes a first injection-molding core, a second injection-molding core, and an injection-molding plate assembly having a mold closing state and a mold opening state, and a placement cavity is defined in the injection-molding plate assembly for placing the metal outer casing when the injection-molding plate assembly is in the mold closing state;
step c, placing the metal outer casing into the placement cavity of the injection-molding plate assembly when the injection-molding plate assembly is in the mold opening state, and closing the injection-molding plate assembly; during closing the injection-molding plate assembly, inserting the first injection-molding core into the first metal outer tube of the metal outer casing, inserting the second injection-molding core into the second metal outer tube of the metal outer casing, and making an end of the second injection-molding core abut against a side of the first injection-molding core; and after closing the injection-molding plate assembly, the first injection-molding core, the second injection-molding core and the metal outer casing together defining an injection-molding cavity for molding the plastic inner tubular body;
step d, injecting plastic in a molten state into the injection-molding cavity, where a melting point of the plastic is smaller than a melting point of the metal outer casing;
step e, cooling and solidifying the plastic in the molten state in the injection-molding cavity to form the plastic inner tubular body including the first plastic inner tube and the second plastic inner tube;
step f, opening the injection-molding plate assembly; during opening the injection-molding plate assembly, pulling out the first injection-molding core from the first plastic inner tube of the plastic inner tubular body, and pulling out the second injection-molding core from the second plastic inner tube of the plastic inner tubular body; and
step g, taking out a molded faucet shell from the injection-molding plate assembly.

In an embodiment, the manufacturing method of the faucet shell further includes:
die-casting molding the metal outer casing, including:
step i, preparing a die-casting mold; where the die-casting mold includes a first die-casting core, a second die-casting core, a third die-casting core and a die-casting molding plate assembly having a mold closing state and a mold opening state, a die-casting cavity is defined in the die-casting molding plate assembly for die-casting the metal outer casing when the die-casting molding plate assembly is in the mold closing state, and the die-casting cavity includes: a first cavity portion for die-casting the first metal outer tube, and a second cavity portion for die-casting the second metal outer tube;
step ii, closing the die-casting molding plate assembly; during closing the die-casting molding plate assembly, inserting the first die-casting core into an end of the first cavity portion of the die-casting cavity, inserting the second die-casting core into another end of the first cavity portion of the die-casting cavity, making an end of the first die-casting core abut against an end of the second die-casting core, inserting the third die-casting core into the second cavity portion of the die-casting cavity, and making an end of the third die-casting core abut against a side of the first die-casting core;
step iii, injecting a metal material in a molten state into the die-casting cavity;
step iv, cooling and solidifying the metal material in the molten state in the die-casting cavity to form the metal outer casing including the first metal outer tube and the second metal outer tube;
step v, opening the die-casting molding plate assembly; during opening the die-casting molding plate assembly, pulling out the first die-casting core from the first metal outer tube of the metal outer casing, pulling out the second die-casting core from the first metal outer tube of the metal outer casing, and pulling out the third die-casting core from the second metal outer tube of the metal outer casing; and
step vi, taking out the metal outer casing from the die-casting molding plate assembly.

In order to solve the above technical problems, the invention provides an injection mold, specially used for injection-molding the plastic inner tubular body of the faucet shell. The injection mold includes an upper fixing plate, an upper molding plate, an upper molding core, a lower fixing plate, a lower molding plate, a lower molding core, a first cylinder, a first injection-molding core, a second cylinder, a straight rack, a gear, a rotation shaft, a rotation arm, and a second injection-molding core. The upper molding plate is installed on a lower side of the upper fixing plate. The upper molding core is installed in a lower end of the upper molding plate. The lower molding plate is installed on an upper side of the lower fixing plate. The lower molding core is installed in the lower molding plate, and a placement cavity is defined between the upper molding core and the lower molding core and for placing the metal outer casing. The first cylinder is installed on a side of the lower molding plate, and a cylinder rod of the first cylinder is connected to the first injection-molding core. The first cylinder is configured to drive the first injection-molding core to be inserted into the first metal outer tube of the metal outer casing placed in the placement cavity. The second cylinder is installed on a side of the lower fixing plate, and a cylinder rod of the second cylinder is connected to the straight rack. The gear is meshed with the straight rack, and the rotation shaft is installed on a middle of the gear. An end of the rotation arm is connected to the rotation shaft, and another end of the rotation arm is connected to the second injection-molding core. The second cylinder is configured to drive the second injection-molding core to be inserted into the second metal outer tube of the metal outer casing placing in the placement cavity, and to abut against a side of the first injection-molding core. The first injection-molding core, the second injection-molding core and the metal outer casing together define an injection-molding cavity for molding the plastic inner tubular body when the injection mold is in a mold closing state.

In order to solve the above technical problems, the invention provides a die-casting mold, which is specially used for die-casting molding the metal outer casing of the faucet shell. The die-casting mold includes a moving die plate, a moving die core, a fixed die plate, a fixed die core, a push-pull rod assembly, a first die-casting core, a third cylinder, a transmission assembly, a second die-casting core, and a third die-casting core. The moving die core is installed in a lower end of the moving die plate, and the fixed die core is installed in an upper end of the fixed die plate. A die-casting cavity is defined between the moving die core and the fixed die core and for die-casting the metal outer casing, and the die-casting cavity includes a first cavity portion for die-casting the first metal outer tube and a second cavity portion for die-casting the second metal outer tube. The push-pull rod assembly is installed on an end of each of the moving die plate and the fixed die plate. The first die-casting core is connected to the push-pull rod assembly, and the moving die plate is configured to drive the push-pull rod assembly to operate, to thereby drive the first die-casting core to be inserted into an end of the first cavity portion during closing the die-casting mold. The third cylinder and the transmission assembly are installed on another end of the fixed die plate, and a cylinder rod of the third cylinder is connected to the transmission assembly. The second die-casting core and the third die-casting core are connected to the transmission assembly, and the third cylinder is configured to drive the transmission assembly, to thereby drive the second die-casting core to be inserted into the other end of the first cavity portion, and drive the third die-casting core to be inserted into the second cavity portion.

The beneficial effects of the invention are as follows.
(1) In the invention, the metal outer casing of the faucet shell includes integrally connected first metal outer tube and second metal outer tube, and the plastic inner tubular body of the faucet shell includes integrally connected first plastic inner tube and second plastic inner tube. The first plastic inner tube is in contact tightly with the inner wall of the first metal outer tube, and the second plastic inner tube is in contact tightly with the inner wall of the second metal outer tube. Therefore, on the one hand, the faucet shell forms a whole, which has strong stability and high texture and aesthetics. On the other hand, when water flows through the first plastic inner tube and the second plastic inner tube, the water flows inside the plastic inner tubular body and does not contact with the metal outer casing. When the metal outer casing is made of the zinc alloy or the aluminum alloy, the metal outer casing will not be oxidized by water and will not release trace elements into the water, which is green, environmentally friendly and has a long service life. Still on the other hand, the orientations of the first plastic inner tube and the second plastic inner tube are different, so that the first plastic inner tube and the second plastic inner tube can support and cooperate with each other to prevent any plastic inner tube from sliding and loosening from the metal outer tubes.
(2) The manufacturing method of the faucet shell of the invention can simultaneously injection mold the first plastic inner tube and the second plastic inner tube with different orientations in the metal outer casing.
(3) The injection mold of the plastic inner tubular body of the faucet shell of the invention can achieve the simultaneous molding of the first plastic inner tube and the second plastic inner tube with different orientations in the metal outer casing.
(4) The die-casting mold of the metal outer casing of the faucet shell of the invention can achieve the simultaneous molding the metal outer casing having the first metal outer tube and the second outer tube.

### BRIEF DESCRIPTION OF DRAWINGS

FIG. 1 illustrates a schematic structural diagram of a faucet shell according to an embodiment of the invention.
FIG. 2 illustrates a schematic sectional diagram of the faucet shell according to an embodiment of the invention.
FIG. 3 illustrates a schematic diagram of a position relationship between a first injection-molding core and a second injection-molding core with the faucet shell in a manufacturing method of the faucet shell according to an embodiment of the invention.
FIG. 4 illustrates a schematic diagram of a position relationship among a first die-casting core, a second die-casting core and a third die-casting core with a metal outer casing in the manufacturing method of the faucet shell according to an embodiment of the invention.
FIG. 5 illustrates a schematic structural diagram of an injection mold according to an embodiment of the invention.
FIG. 6 illustrates a first schematic dispersed structural diagram of the injection mold according to an embodiment of the invention.
FIG. 7 illustrates a second schematic dispersed structural diagram of the injection mold according to an embodiment of the invention.
FIG. 8 illustrates a schematic partially enlarged diagram of an area A in FIG. 7.
FIG. 9 illustrates a schematic structural diagram of a die-casting mold according to an embodiment of the invention.
FIG. 10 illustrates a first schematic dispersed structural diagram of the die-casting mold according to an embodiment of the invention.
FIG. 11 illustrates a schematic partially enlarged diagram of an area B in FIG. 10.
FIG. 12 illustrates a second schematic dispersed structural diagram of the die-casting mold according to an embodiment of the invention.

### DETAILED DESCRIPTION OF EMBODIMENTS

The structural and working principles of the invention will be further described in detail in conjunction with drawings below.

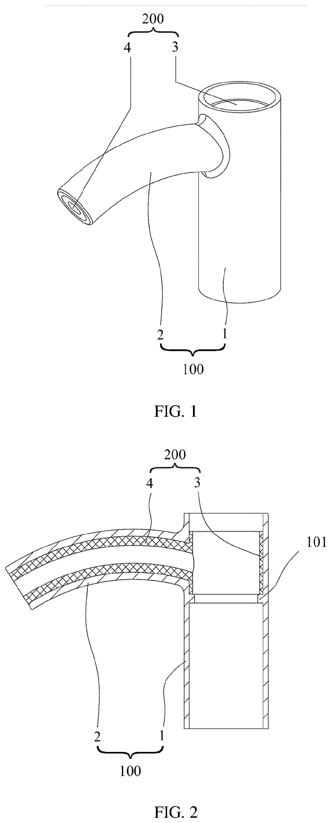

As shown in FIG. 1 and FIG. 2, the invention provide a faucet shell, including a metal outer casing 100 and a plastic inner tubular body 200. The plastic inner tubular body 200 is disposed in the metal outer casing 100, and is in contact tightly with an inner wall of the metal outer casing 100. The metal outer casing 100 includes a first metal outer tube 1 and a second metal outer tube 2, a side of the first metal outer tube 1 is integrally connected to the second metal outer tube 2, and the first metal outer tube 1 is in communication with the second metal outer tube 2. The plastic inner tubular body 200 includes a first plastic inner tube 3 and a second plastic inner tube 4, a side of the first plastic inner tube 3 is integrally connected to the second plastic inner tube 4, and the first plastic inner tube 3 is in communication with the second plastic inner tube 4. The first plastic inner tube 3 is disposed in the first metal outer tube 1, and is in contact tightly with an inner wall of the first metal outer tube 1. The second plastic inner tube 4 is disposed in the second metal outer tube 2, and is in contact tightly with an inner wall of the second metal outer tube 2. The faucet shell of the invention has two integrally connected metal outer tubes and two integrally connected plastic inner tubes, so that the two metal outer tubes and the two plastic inner tubes can form a whole, and the faucet shell has strong overall stability and high overall texture and aesthetics. When water flows through the two plastic inner tubes of the faucet shell, the water flows inside the two plastic inner tubes and does not contact with the metal outer casing. When the metal outer casing is made of a zinc alloy or an aluminum alloy, the metal outer casing will not be oxidized by water and will not release trace elements into the water, which is green, environmentally friendly and has a long service life. The two plastic inner tubes of the faucet shell can support and cooperate with each other to prevent any plastic inner tube from sliding and loosening from the two metal outer tubes.

In an embodiment, the first metal outer tube 1 is a straight tube, the second metal outer tube 2 is an arc-shaped bent tube, the first plastic inner tube 3 is a straight tube, and the second metal outer tube 4 is an arc-shaped bent tube. Specifically, the first metal outer tube 1 and the first plastic inner tube 3 can be combined to form a main body of the faucet shell, which is easy to install on external bathroom components and can be used to install internal parts such as a valve core and water tubes of the faucet. The second metal outer tube 2 and the second plastic inner tube 4 can be combined to form an outer outlet component of the faucet shell.

In an embodiment, an annular convex ring 101 is disposed on the inner wall of the first metal outer tube 1, and an end of the first plastic inner tube 3 is connected to a side of the annular convex ring 101.

In an embodiment, a material of the metal outer casing 100 includes a zinc alloy or an aluminium alloy. Specifically, the material of the metal outer casing 100 is the zinc alloy. In the zinc alloy materials, a weight percentage of aluminium is in a range of 3.9% to 4.3%, a weight percentage of magnesium is in a range of 0.03% to 0.06%, and the remaining amount is zinc and other impurity materials. The impurity materials mainly include trace amounts of copper, iron, lead and other elements. A material of the plastic inner tubular body 200 includes any one of polyphthalamide, polyformaldehyde, and polypheylene ether.

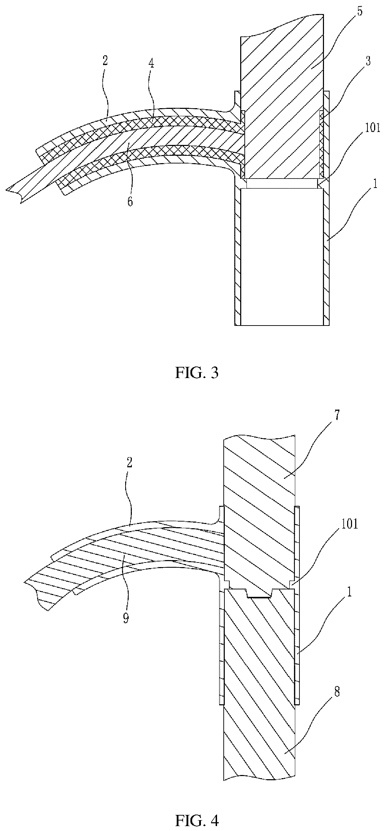

As shown in FIG. 3, with reference to FIG. 1 and FIG. 2, the invention provides a manufacturing method of the faucet shell, including the following steps a to g.

In step a, a metal outer casing 100 of the faucet shell is prepared.

In step b, an injection mold is prepared. The injection mold includes a first injection-molding core 5, a second injection-molding core 6, and an injection-molding plate assembly having a mold closing state and a mold opening state. A placement cavity is defined in the injection-molding plate assembly for placing the metal outer casing 100 when the injection-molding plate assembly is in the mold closing state.

In step c, the metal outer casing 100 is placed into the placement cavity 22 of the injection-molding plate assembly when the injection-molding plate assembly is in the mold opening state, and the injection-molding plate assembly is closed. During closing the injection-molding plate assembly, the first injection-molding core 5 is inserted into the first metal outer tube 1 of the metal outer casing 100, the second injection-molding core 6 is inserted into the second metal outer tube 2 of the metal outer casing 100, and an end of the second injection-molding core 6 is abutted against a side of the first injection-molding core 5. After closing the injection-molding plate assembly, the first injection-molding core 5, the second injection-molding core 6 and the metal outer casing 100 together define an injection-molding cavity for molding the plastic inner tubular body 200.

In step d, plastic in a molten state is injected into the injection-molding cavity. A melting point of the plastic is smaller than a melting point of the metal outer casing 100.

In step e, the plastic in the molten state in the injection-molding cavity is cooled and solidified to form the plastic inner tubular body 200 including the first plastic inner tube 3 and the second plastic inner tube 4.

In step f, the injection-molding plate assembly is opened. During opening the injection-molding plate assembly, the first injection-molding core 5 is pulled out from the first plastic inner tube 3 of the plastic inner tubular body 200, and the second injection-molding core 6 is pulled out from the second plastic inner tube 4 of the plastic inner tubular body 200.

In step g, a molded faucet shell is taken out from the injection-molding plate assembly.

As shown in FIG. 4, with reference to FIG. 1 and FIG. 2, the manufacturing method of the faucet shell further includes die-casting molding the metal outer casing 200, including the following steps i to vi.

In step i, a die-casting mold is prepared. The die-casting mold includes a first die-casting core 7, a second die-casting core 8, a third die-casting core 9 and a die-casting molding plate assembly having a mold closing state and a mold opening state. A die-casting cavity is defined in the die-casting molding plate assembly for die-casting the metal outer casing 100 when the die-casting molding plate assembly is in the mold closing state, and the die-casting cavity includes a first cavity portion for die-casting the first metal outer tube 1, and a second cavity portion for die-casting the second metal outer tube 2.

In step ii, the die-casting molding plate assembly is closed. During closing the die-casting molding plate assembly, the first die-casting core 7 is inserted into an end of the first cavity portion of the die-casting cavity, the second die-casting core 8 is inserted into another end of the first cavity portion of the die-casting cavity, an end of the first die-casting core 7 is abutted against an end of the second die-casting core 8, the third die-casting core 9 is inserted into the second cavity portion of the die-casting cavity, and an end of the third die-casting core 9 is abutted against a side of the first die-casting core 7.

In step iii, a metal material in a molten state is injected into the die-casting cavity.

In step iv, the metal material in the molten state in the die-casting cavity is cooled and solidified to form the metal outer casing 100 including the first metal outer tube 1 and the second metal outer tube 2.

In step v, the die-casting molding plate assembly is opened. During opening the die-casting molding plate assembly, the first die-casting core 7 is pulled out from the first metal outer tube 1 of the metal outer casing 100, the second die-casting core 8 is pulled out from the first metal outer tube 1 of the metal outer casing 100, and the third die-casting core 9 is pulled out from the second metal outer tube 2 of the metal outer casing 100.

In step vi, the molded metal outer casing 100 is taken out from the die-casting molding plate assembly.

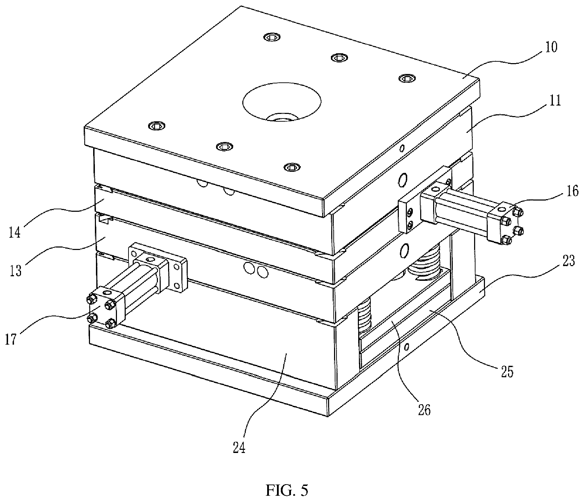

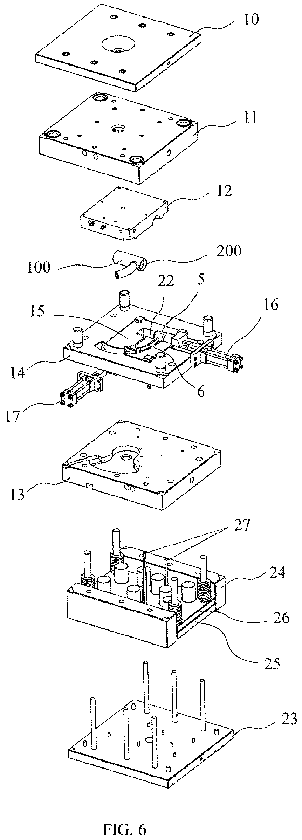

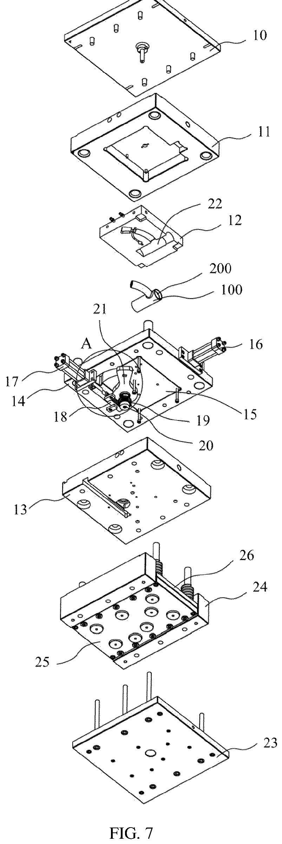

As shown in FIGS. 5-8, with reference to FIGS. 1-3, the invention provides an injection mold, which is specially used for injection-molding the plastic inner tubular body 200 of the faucet shell. The injection mold includes an upper fixing plate 10, an upper molding plate 11, an upper molding core 12, a lower fixing plate 13, a lower molding plate 14, a lower molding core 15, a first cylinder 16, a first injection-molding core 5, a second cylinder 17, a straight rack 18, a gear 19, a rotation shaft 20, a rotation arm 21, and a second injection-molding core 6. The upper molding plate 11 is installed on a lower side of the upper fixing plate 10. The upper molding core 12 is installed in a lower end of the upper molding plate 11. The lower molding plate 14 is installed on an upper side of the lower fixing plate 13. The lower molding core 15 is installed in the lower molding plate 14, and a placement cavity 22 is defined between the upper molding core 12 and the lower molding core 15 and for placing the metal outer casing 100. The first cylinder 16 is installed on a side of the lower molding plate 14, and a cylinder rod of the first cylinder 16 is connected to the first injection-molding core 5. The first cylinder 16 is configured to drive the first injection-molding core 5 to be inserted into the first metal outer tube 1 of the metal outer casing 100 placed in the placement cavity 22. The second cylinder 17 is installed on a side of the lower fixing plate 14, and a cylinder rod of the second cylinder 17 is connected to the straight rack 18. The gear 19 is meshed with the straight rack 18, and the rotation shaft 20 is installed on a middle of the gear 19. An end of the rotation arm 21 is connected to the rotation shaft 20, and another end of the rotation arm 21 is connected to the second injection-molding core 6. The second cylinder 17 is configured to drive the second injection-molding core 6 to be inserted into the second metal outer tube 2 of the metal outer casing 100 placing in the placement cavity 22, and to abut against a side of the first injection-molding core 5. The first injection-molding core 5, the second injection-molding core 6 and the metal outer casing 100 together define an injection-molding cavity for molding the plastic inner tubular body 200 when the injection mold is in a mold closing state.

As shown in FIGS. 5-8, the first injection-molding core 5 is a straight injection-molding core, and the second injection-molding core 6 is an arc-shaped injection-molding core.

As shown in FIGS. 5-8, the injection mold further includes a bottom plate 23, side supporting plates 24 and a first ejector pin assembly. A number of the side supporting plates 24 is two, the two side supporting plates 24 are installed above two ends of the bottom plate 23 respectively, and the lower fixing plate 13 is installed on the two side support plates 24. The first ejector pin assembly is movably installed between the two side support plates 24, and the first ejector pin assembly includes a first ejector pin fixing plate 25, a first ejector pin plate 26 and first ejector pins 27. The first ejector pin plate 26 is installed on the first ejector pin fixing plate 25. The first ejector pins 27 are installed on the first ejector pin plate 26, and an end of each first ejector pin 27 movably extends into the placement cavity 22.

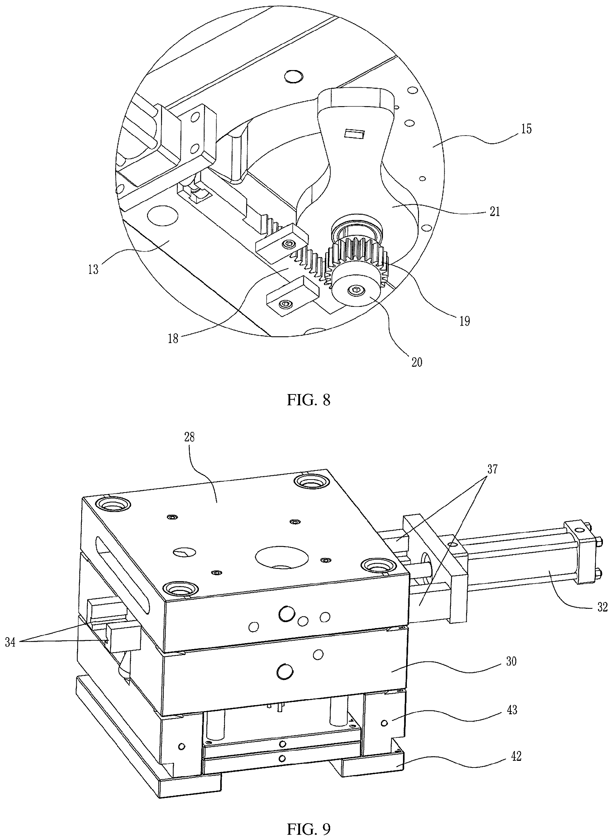

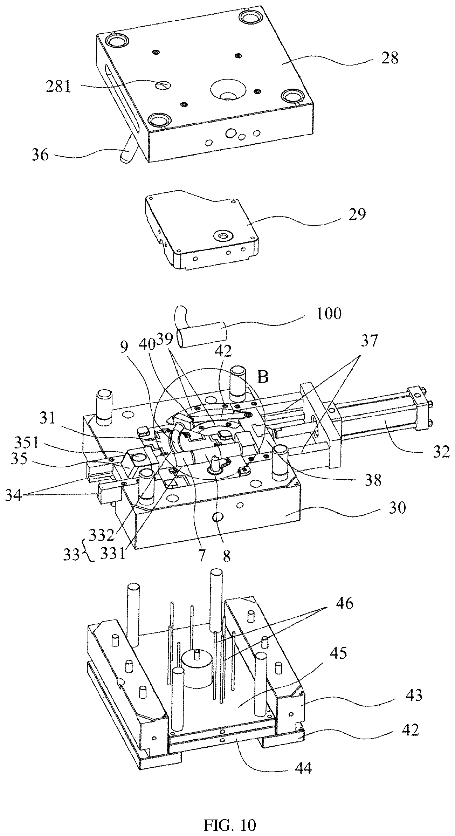

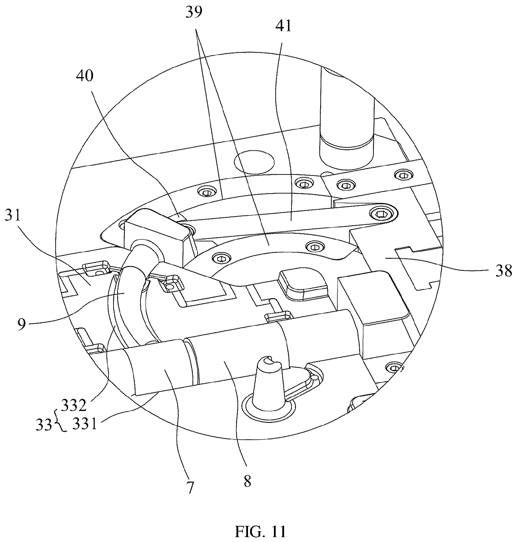

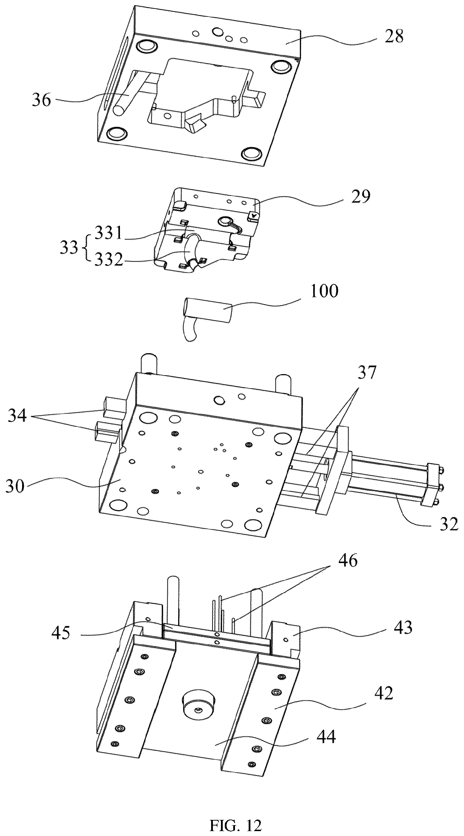

As shown in FIGS. 9-12, with reference to FIG. 1, FIG. 2 and FIG. 4, the invention provides a die-casting mold, which is specially used for die-casting molding the metal outer casing 100 of the faucet shell. The die-casting mold includes a moving die plate 28, a moving die core 29, a fixed die plate 30, a fixed die core 31, a push-pull rod assembly, a first die-casting core 7, a third cylinder 32, a transmission assembly, a second die-casting core 8, and a third die-casting core 9. The moving die core 29 is installed in a lower end of the moving die plate 28, and the fixed die core 31 is installed in an upper end of the fixed die plate 30. A die-casting cavity 33 is defined between the moving die core 29 and the fixed die core 31 and for die-casting the metal outer casing 100, and the die-casting cavity 33 includes a first cavity portion 331 for die-casting the first metal outer tube 1 and a second cavity portion 332 for die-casting the second metal outer tube 2. The push-pull rod assembly is installed on an end of each of the moving die plate 28 and the fixed die plate 30. The first die-casting core 7 is connected to the push-pull rod assembly, and the moving die plate 28 is configured to drive the push-pull rod assembly to operate, to thereby drive the first die-casting core 7 to be inserted into an end of the first cavity portion 331 during closing the die-casting mold. The third cylinder 32 and the transmission assembly are installed on another end of the fixed die plate 30, and a cylinder rod of the third cylinder 32 is connected to the transmission assembly. The second die-casting core 8 and the third die-casting core 9 are connected to the transmission assembly, and the third cylinder 32 is configured to drive the transmission assembly, to thereby drive the second die-casting core 8 to be inserted into another end of the first cavity portion 331, and drive the third die-casting core 9 to be inserted into the second cavity portion 332.

A shown in FIGS. 9-12, the push-pull rod assembly includes a first slide rail 34, a first slider 35 and a push-pull rod 36. The first slide tail 34 is installed in the end of the fixed die plate 30. The first slider 35 is slidably installed on the first slide rail 34, and the first die-casting core 7 is connected to the first slider 35. An end of the moving die plate 28 defines an oblique fixing hole 281, and an upper end of the push-pull rod 36 is installed in the fixing hole 281. The first slider 35 defines an oblique slide hole 351, and a lower end of the push-pull rod 36 movably penetrates through the slide hole 351. The push-pull rod 36 is configured to drive the first slider 35 to move back and forth along the first slide rail 34 when the push-pull rod 36 moves up and down.

As shown in FIGS. 9-12, the transmission assembly includes a second slide rail 37, a second slider 38, an arc-shaped slide rail 39, a third slider 40 and a connecting rod 41. The second slide rail 37 is installed on the another end of the fixed die plate 30. The second slider 38 is slidably installed on the second slide rail 37, the third cylinder 32 is fixed on an end of the second slide rail 27, the cylinder rod of the third cylinder 32 is connected to the second slider 38, and the second die-casting core 8 is connected to an end of the second slider 38. The arc-shaped slide rail 39 is installed in the another end of the fixed die plate. The third slider 40 is slidably installed on the arc-shaped slide rail 39. An end of the connecting rod 41 is hinged to another end of the second slider 38, another end of the connecting rod 41 is hinged to the third slider 40, and the second die-casting core 8 is connected to the third slider 40.

As shown in FIGS. 9-12, the first die-casting core 7 and the second die-casting core 8 each are a straight die-casting core, and the third die-casting core 9 is an arc-shaped die-casting core.

As shown in FIGS. 9-12, the die-casting mold further includes a supporting bottom plate 42, fixed die supporting plates 43 and a second ejector pin assembly. A number of the fixed die supporting plates 43 is two, and the two fixed die supporting plates 43 are installed on the supporting bottom plate 42, and the fixed die plate 30 is installed on the two fixed die supporting plates 43. The second ejector pin assembly is movably installed between the two fixed die supporting plates 43, and the second ejector pin assembly includes a second ejector pin fixing plate 44, a second ejector pin plate 45 and second ejector pins 46. The second ejector pin plate 45 is installed on the second ejector pin fixing plate 44. The second ejector pins 46 are installed on the second ejector pin plate 45, and an end of each second ejector pin 46 movably extends into the die-casting cavity 33.

The above is only some of the embodiments of the invention. Any minor amendments, equivalent changes, and amendments made to the above embodiments based on the technical solution of the invention are within a scope of the technical solution of the invention.

## Claims

1. A faucet shell, comprising: a metal outer casing and a plastic inner tubular body, the plastic inner tubular body being disposed in the metal outer casing, and the plastic inner tubular body being in contact tightly with an inner wall of the metal outer casing;
wherein the metal outer casing comprises a first metal outer tube and a second metal outer tube, a side of the first metal outer tube is integrally connected to the second metal outer tube, and the first metal outer tube is in communication with the second metal outer tube;
wherein the plastic inner tubular body comprises a first plastic inner tube and a second plastic inner tube, a side of the first plastic inner tube is integrally connected to the second plastic inner tube, and the first plastic inner tube is in communication with the second plastic inner tube;
wherein the first plastic inner tube is disposed in the first metal outer tube and in contact tightly with an inner wall of the first metal outer tube; and
wherein the second plastic inner tube is disposed in the second metal outer tube and in contact tightly with an inner wall of the second metal outer tube.

2. The faucet shell as claimed in claim 1, wherein the first metal outer tube is a straight tube, the second metal outer tube is an arc-shaped bent tube, the first plastic inner tube is a straight tube, and the second metal outer tube is an arc-shaped bent tube.

3. The faucet shell as claimed in claim 2, wherein an annular convex ring is disposed on the inner wall of the first metal outer tube, and an end portion of the first plastic inner tube is connected to a side portion of the annular convex ring.

4. The faucet shell as claimed in claim 1, wherein a material of the metal outer casing comprises a zinc alloy or an aluminium alloy.

5. The faucet shell as claimed in claim 1, wherein a material of the plastic inner tubular body comprises any one of polyphthalamide, polyformaldehyde, and polypheylene ether.

6. A manufacturing method of the faucet shell as claimed in claim 1, comprising:
step a, preparing the metal outer casing of the faucet shell;
step b, preparing an injection mold, wherein the injection mold comprises a first injection-molding core, a second injection-molding core, and an injection-molding plate assembly having a mold closing state and a mold opening state; and a placement cavity is defined in the injection-molding plate assembly for placing the metal outer casing when the injection-molding plate assembly is in the mold closing state;
step c, placing the metal outer casing into the placement cavity of the injection-molding plate assembly when the injection-molding plate assembly is in the mold opening state, and closing the injection-molding plate assembly; during closing the injection-molding plate assembly, inserting the first injection-molding core into the first metal outer tube of the metal outer casing, inserting the second injection-molding core into the second metal outer tube of the metal outer casing, and making an end of the second injection-molding core abut against a side of the first injection-molding core; and after closing the injection-molding plate assembly, the first injection-molding core, the second injection-molding core and the metal outer casing together defining an injection-molding cavity for molding the plastic inner tubular body;
step d, injecting plastic in a molten state into the injection-molding cavity, wherein a melting point of the plastic is smaller than a melting point of the metal outer casing;
step e, cooling and solidifying the plastic in the molten state in the injection-molding cavity to form the plastic inner tubular body including the first plastic inner tube and the second plastic inner tube;
step f, opening the injection-molding plate assembly, during opening the injection-molding plate assembly, pulling out the first injection-molding core from the first plastic inner tube of the plastic inner tubular body, and pulling out the second injection-molding core from the second plastic inner tube of the plastic inner tubular body; and
step g, taking out a molded faucet shell from the injection-molding plate assembly.

7. The manufacturing method of the faucet shell as claimed in claim 6, further comprising:
die-casting molding the metal outer casing, including:
step i, preparing a die-casting mold, wherein the die-casting mold comprises a first die-casting core, a second die-casting core, a third die-casting core, and a die-casting molding plate assembly having a mold closing state and a mold opening state, a die-casting cavity is defined in the die-casting molding plate assembly for die-casting molding the metal outer casing when the die-casting molding plate assembly is in the mold closing state, and the die-casting cavity comprises: a first cavity portion for die-casting molding the first metal outer tube, and a second cavity portion for die-casting molding the second metal outer tube;
step ii, closing the die-casting molding plate assembly; during closing the die-casting molding plate assembly, inserting the first die-casting core into an end of the first cavity portion of the die-casting cavity, inserting the second die-casting core into another end of the first cavity portion of the die-casting cavity, making an end of the first die-casting core abut against an end of the second die-casting core, inserting the third die-casting core into the second cavity portion of the die-casting cavity, and making an end of the third die-casting core abut against a side of the first die-casting core;
step iii, injecting a metal material in a molten state into the die-casting cavity;
step iv, cooling and solidifying the metal material in the molten state in the die-casting cavity to form the metal outer casing including the first metal outer tube and the second metal outer tube;
step v, opening the die-casting molding plate assembly; during opening the die-casting molding plate assembly, pulling out the first die-casting core from the first metal outer tube of the metal outer casing, pulling out the second die-casting core from the first metal outer tube of the metal outer casing, and pulling out the third die-casting core from the second metal outer tube of the metal outer casing; and
step vi, taking out the metal outer casing from the die-casting molding plate assembly.

8. An injection mold for injection-molding the plastic inner tubular body of the faucet shell as claimed in claim 1, comprising:
an upper fixing plate;
an upper molding plate, installed on a lower side of the upper fixing plate;
an upper molding core, installed in a lower end of the upper molding plate;
a lower fixing plate;
a lower molding plate, installed on an upper side of the lower fixing plate;
a lower molding core, installed in the lower molding plate; wherein a placement cavity is defined between the upper molding core and the lower molding core and for placing the metal outer casing;
a first cylinder, installed on a side of the lower molding plate;
a first injection-molding core, connected to a cylinder rod of the first cylinder; wherein the first cylinder is configured to drive the first injection-molding core to be inserted into the first metal outer tube of the metal outer casing placed in the placement cavity;
a second cylinder, installed on a side of the lower fixing plate;
a straight rack, connected to a cylinder rod of the second cylinder;
a gear, meshed with the straight rack;
a rotation shaft, installed on a middle of the gear;
a rotation arm, wherein an end of the rotation arm is connected to the rotation shaft; and
a second injection-molding core, connected to another end of the rotation arm; wherein the second cylinder is configured to drive the second injection-molding core to be inserted into the second metal outer tube of the metal outer casing placing in the placement cavity and to abut against a side of the first injection-molding core;
wherein the first injection-molding core, the second injection-molding core and the metal outer casing together define an injection-molding cavity for molding the plastic inner tubular body when the injection mold is in a mold closing state.

9. The injection mold as claimed in claim 8, wherein the first injection-molding core is a straight injection-molding core, and the second injection-molding core is an arc-shaped injection-molding core.

10. The injection mold as claimed in claim 8, further comprising:
a bottom plate;
two side supporting plates, installed above two ends of the bottom plate respectively; wherein the lower fixing plate is installed on the two side supporting plates; and
a first ejector pin assembly, movably installed between the two side supporting plates; wherein the first ejector pin assembly comprises:
a first ejector pin fixing plate;
a first ejector pin plate, installed on the first ejector pin fixing plate; and
first ejector pins, installed on the first ejector pin plate; wherein an end of each of the first ejector pins movably extends into the placement cavity.

11. A die-casting mold for die-casting molding the metal outer casing of the faucet shell as claimed in claim 1, comprising:
a moving die plate;
a moving die core, installed in a lower end of the moving die plate;
a fixed die plate;
a fixed die core, installed in an upper end of the fixed die plate; wherein a die-casting cavity is defined between the moving die core and the fixed die core and for die-casting molding the metal outer casing, and the die-casting cavity comprises: a first cavity portion for die-casting molding the first metal outer tube, and a second cavity portion for die-casting molding the second metal outer tube;
a push-pull rod assembly, installed on an end of each of the moving die plate and the fixed die plate;
a first die-casting core, connected to the push-pull rod assembly; wherein the moving die plate is configured to drive the push-pull rod assembly to operate, to thereby drive the first die-casting core to be inserted into an end of the first cavity portion during closing the die-casting mold;
a third cylinder, installed on another end of the fixed die plate;
a transmission assembly, installed on the another end of the fixed die plate, and connected to a cylinder rod of the third cylinder;
a second die-casting core, connected to the transmission assembly; and
a third die-casting core, connected to the transmission assembly; wherein the third cylinder is configured to drive the transmission assembly, to thereby drive the second die-casting core to be inserted into another end of the first cavity portion and drive the third die-casting core to be inserted into the second cavity portion.

12. The die-casting mold as claimed in claim 11, wherein the push-pull rod assembly comprises:
a first slide rail, installed in the end of the fixed die plate;
a first slider, slidably installed on the first slide rail, and connected to the first die-casting core; and
a push-pull rod, wherein an end of the moving die plate defines an oblique fixing hole, an upper end of the push-pull rod is installed in the fixing hole, the first slider defines an oblique slide hole, a lower end of the push-pull rod movably penetrates through the slide hole, and the push-pull rod is configured to drive the first slider to move back and forth along the first slide rail when the push-pull rod moves up and down.

13. The die-casting mold as claimed in claim 11, wherein the transmission assembly comprises:
a second slide rail, installed on the another end of the fixed die plate; wherein the third cylinder is fixed to an end of the second slide rail,
a second slider, slidably installed on the second slide rail, and connected to the cylinder rod of the third cylinder; wherein the second die-casting core is connected to an end of the second slider;
an arc-shaped slide rail, installed in the another end of the fixed die plate;
a third slider, slidably installed on the arc-shaped slide rail, and connected to the second die-casting core; and
a connecting rod, wherein an end of the connecting rod is hinged to another end of the second slider, and another end of the connecting rod is hinged to the third slider.

14. The die-casting mold as claimed in claim 11, wherein the first die-casting core and the second die-casting core each are a straight die-casting core, and the third die-casting core is an arc-shaped die-casting core.

15. The die-casting mold as claimed in claim 11, further comprising:
a supporting bottom plate;
two fixed die supporting plates, installed on the supporting bottom plate; wherein the fixed die plate is installed on the two fixed die supporting plates; and
a second ejector pin assembly, movably installed between the two fixed die supporting plates; wherein the second ejector pin assembly comprises:
a second ejector pin fixing plate;
a second ejector pin plate, installed on the second ejector pin fixing plate; and
second ejector pins, installed on the second ejector pin plate; wherein an end of each of the second ejector pins movably extends into the die-casting cavity.
